(19) Europäisches Patentamt
European Patent Office
Office européen des brevets

(11) **EP 3 088 845 B1**

(12) **EUROPÄISCHE PATENTSCHRIFT**

(45) Veröffentlichungstag und Bekanntmachung des Hinweises auf die Patenterteilung:
**28.02.2018 Patentblatt 2018/09**

(51) Int Cl.:
***G01C 21/30*** *(2006.01)*

(21) Anmeldenummer: **16167623.4**

(22) Anmeldetag: **29.04.2016**

(54) **BESTIMMEN EINES VON EINEM BENUTZER EINES NAVIGATIONSSYSTEMS BENUTZTEN WEGS**

DETERMINATION OF A PATH USED BY A USER OF A NAVIGATION SYSTEM

DETERMINATION D'UN ITINERAIRE SELECTIONNE PAR UN UTILISATEUR D'UN SYSTEME DE NAVIGATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.04.2015 DE 102015208114**

(43) Veröffentlichungstag der Anmeldung:
**02.11.2016 Patentblatt 2016/44**

(73) Patentinhaber: **Preh Car Connect GmbH**
**01156 Dresden (DE)**

(72) Erfinder: **Haberjahn, Dr. rer. nat. Mathias**
**01445 Radebeul (DE)**

(56) Entgegenhaltungen:
**EP-A1- 0 534 892        DE-A1- 3 439 000**
**DE-A1-102004 049 689     DE-A1-102010 012 877**

EP 3 088 845 B1

**Beschreibung**

Die Erfindung betrifft ein Verfahren zum Bestimmen eines von einem Benutzer eines Navigationssystems aktuell benutzten Wegs und ein Navigationssystem zur Durchführung des Verfahrens.

Moderne Navigationssysteme sind in der Lage, eine geografische Benutzerposition eines Benutzers des Navigationssystems mit Hilfe von Sensorsystemen zu ermitteln. Bei guten Empfangsbedingungen kann die absolute Benutzerposition beispielsweise durch den Empfang und die Auswertung der Signale von Navigationssatelliten eines globalen Navigationssatellitensystems (GNSS, Global Navigation Satellite System) ermittelt werden. Unzureichende Empfangsbedingungen lassen sich durch eine so genannte Koppelortung, d. h. durch eine Fortführung der aktuellen Benutzerposition mit einer Kombination aus Strecken- und Winkelmessungen, kurzzeitig überbrücken. Die so geortete Benutzerposition wird anschließend mittels des Navigationssystems in ein Wegenetz einer digitalen Karte eingepasst, die in dem Navigationssystem gespeichert ist (Karteneinpassung). Unter einem Wegenetz wird hierin ein Netz von Straßen und Wegen verstanden, welche mit einem Fahrzeug, zum Beispiel einem Personenkraftwagen, befahren oder von einem Fußgänger benutzt werden können.

Die bei der Karteneinpassung ermittelte Kartenposition kann von der tatsächlichen geografischen Benutzerposition abweichen und adressiert höchstens ein Wegsegment, auf dem sich der Benutzer momentan befindet. Die Kartenposition ist der Ausgangspunkt für eine Routenberechnung bei einer Zielführung zu einem Navigationsziel mittels des Navigationssystems. Als Zielführung wird hierin ein Prozess bezeichnet, der den Benutzer entlang einer Route zu einem Ziel leitet.

Bei zueinander benachbart verlaufenden Wegsegmenten, zum Beispiel bei parallelen, dicht beieinander liegenden Wegen, ergeben sich für die Benutzerposition oft mehrere ähnlich wahrscheinliche Kartenpositionen bei der Karteneinpassung. Um eine Fehlbestimmung der Benutzerposition zu vermeiden, wird in solchen Situationen meist einer aktuellen Routenposition, d. h. einer Position auf einer aktuell von dem Navigationssystem zur Zielführung verwendeten Route, vertraut. Hierbei ergibt sich jedoch der Nachteil, dass ein so genanntes "Bewegen gegen die aktuelle Routenauswahl", d. h. ein Bewegen, bei dem von der durch das Navigationssystem berechneten Route abgewichen wird, nicht oder nur stark verzögert erkannt wird. Als Folge davon können von dem Navigationssystem falsche Routen- und Manövervorschläge erzeugt und ausgegeben werden. Das Problem resultiert somit aus der unsicheren Positionierung an den parallelen, dicht beieinander liegenden Wegen. Es ist eine sichere Positionsentscheidung notwendig, um ein eventuelles bewusstes oder unbewusstes Bewegen gegen die aktuelle Routenauswahl zuverlässig zu erkennen und in diesem Fall ein Neuberechnen einer Route (engl. "Rerouting") auszulösen.

Der Erfindung liegt die Aufgabe zu Grunde, ein verbessertes Verfahren zum Bestimmen eines von einem Benutzer eines Navigationssystems aktuell benutzten Wegs und ein Navigationssystem zur Durchführung des Verfahrens anzugeben. Verfahren und Navigationssysteme, die Höhenmessungen gebrauchen, um die Positionsbestimmung zu verbessern, sind aus DE 10 2004 049 689 A1 und EP 0 534 892 A1 bekannt. Die Aufgabe wird erfindungsgemäß hinsichtlich des Verfahrens durch die Merkmale des Anspruchs 1 und hinsichtlich des Navigationssystems durch die Merkmale des Anspruchs 10 gelöst.

Ausgestaltungen der Erfindung sind Gegenstand der Unteransprüche.

Bei dem erfindungsgemäßen Verfahren zum Bestimmen eines von einem Benutzer eines Navigationssystems aktuell benutzten Wegs wird mittels des Navigationssystems eine digitale Karte mit Informationen zu dreidimensionalen Verläufen von Wegen gespeichert. Ferner werden eine aktuelle ungefähre Benutzerposition des Benutzers und, anhand der digitalen Karte, Wegkandidaten in einer Umgebung der ermittelten ungefähren Benutzerposition ermittelt. Die Wegekandidaten sind hierbei aus einer initialen Startposition des Benutzers heraus erreichbar. Für jeden der Wegkandidaten wird anhand der digitalen Karte ein Höhenprofil einer Weghöhe entlang eines Wegabschnitts des Wegkandidaten ermittelt. Entlang einer Benutzertrajektorie des Benutzers werden Messsignale zur Änderung einer Benutzerhöhe, in der sich der Benutzer befindet, erfasst und aus den erfassten Messsignalen wird ein Höhenänderungsverlauf der Änderung der Benutzerhöhe entlang eines Benutzertrajektorienabschnitts der Benutzertrajektorie ermittelt. Der aus den Messsignalen ermittelte Höhenänderungsverlauf wird mit den für die Wegkandidaten ermittelten Höhenprofilen verglichen, um den aktuell benutzten Weg zu bestimmen, wobei zum Vergleich des Höhenänderungsverlaufs des Benutzertrajektorienabschnitts und der anhand der digitalen Karte ermittelten Höhenprofile der Wegkandidaten für jeden der Wegkandidaten eine Höhenänderungsabweichung des anhand der digitalen Karte ermittelten Höhenprofils von dem aus den Messsignalen ermittelten Höhenänderungsverlauf des Benutzertrajektorienabschnitts berechnet wird. Erfindungsgemäß werden also Änderungen der Benutzerhöhe entlang einer Benutzertrajektorie eines Benutzers erfasst und mit anhand einer digitalen Karte ermittelten Höhenprofilen von Wegen, die sich in der Nähe des Benutzers befinden, verglichen, um den von dem Benutzer aktuell benutzten Weg zu identifizieren. Die Verwendung der Benutzerhöhe zur Identifizierung des aktuell benutzten Wegs erweitert die Möglichkeiten, unter verschiedenen in der Nähe des Benutzers verlaufenden Wegen den tatsächlich aktuell benutzten Weg zuverlässig zu bestimmen. Das erfindungsgemäße Verfahren ist somit vorteilhaft gegenüber herkömmlichen Verfahren, die auf einer lediglich zweidimensionalen Auswertung der Benutzertrajektorie und der Wege basieren.

Die erfindungsgemäße Erfassung eines Verlaufs der Änderung der Benutzerhöhe entlang der Benutzertrajektorie berücksichtigt, dass die Erfassung einer absoluten Benutzerhöhe in der Regel schwieriger und ungenauer als die Erfassung einer relativen Änderung der Benutzerhöhe ist. Außerdem ermöglicht die Auswertung eines Verlaufs der Änderung der Benutzerhöhe gegenüber einer Auswertung einer nur an einem Punkt erfassten Benutzerhöhe eine eindeutigere und zuverlässigere Identifizierung eines aktuell benutzten Wegs, da sich verschiedene Wege in der Regel durch die Verläufe der Änderungen ihrer Weghöhen voneinander unterscheiden, auch wenn sie punktuell gleiche oder ähnliche Änderungen ihrer Weghöhen aufweisen. Die Gefahr einer fehlerhaften Zielführung durch das Navigationssystem aufgrund einer fehlerhaften Bestimmung des aktuell benutzten Wegs kann somit reduziert werden.

Eine Ausgestaltung der Erfindung sieht vor, dass die aktuelle ungefähre Benutzerposition des Benutzers durch eine Auswertung von Signalen, die von Satelliten zur Positionsbestimmung ausgesendet werden, und/oder durch eine Koppelortung ermittelt wird.

Diese Ausgestaltung der Erfindung ermöglicht die Verwendung üblicher Ausstattungen von Navigationssystemen zur Ermittlung einer aktuellen ungefähren Benutzerposition, so dass hierfür keine zusätzliche Hardware oder Software benötigt wird.

Eine weitere Ausgestaltung der Erfindung sieht vor, dass zur Ermittlung des Höhenänderungsverlaufs des Benutzertrajektorienabschnitts an verschiedenen Orten der Benutzertrajektorie jeweils ein Messsignal eines Höhensensors erfasst wird und aus den erfassten Messsignalen Höhenänderungen der Benutzerhöhe ermittelt werden.

Gemäß einer weiteren Ausgestaltung der Erfindung werden aus den Messsignalen des Höhensensors Benutzerhöhen und darauf basierend die Höhenänderungen ermittelt, wobei die Messwerte der Benutzerhöhen zur Kompensation eines Messrauschens und von Messfehlern mit einem Kaiman-Filter bearbeitet werden. Der Kalman-Filter ermöglicht eine effiziente Kompensation von Messrauschen und Messfehlern bei der Erfassung der Benutzerhöhen.

Gemäß einer weiteren Ausgestaltung der Erfindung ist der Höhensensor ein Barometer. Die Verwendung eines Barometers zur Ermittlung von Höhenänderungen der Benutzerhöhe hat Vorteile im Vergleich zu anderen für diesen Zweck verfügbaren Messeinheiten (Messvorrichtungen, Messeinrichtungen), beispielsweise einem Drehwinkelsensor oder einem Richtungsbeschleunigungssensor. So ist ein Beschleunigungssensor hinsichtlich seines Einbaus, seiner Kalibrierung und gegenüber äußeren Einflüssen sehr empfindlich. Demgegenüber besteht ein Vorteil eines Barometers in dessen robuster Handhabung und Funktion. Zudem hat die Einbaulage eines Barometers keinen direkten Einfluss auf die Messung und muss nicht gesondert kalibriert werden. Weitere Vorteile einer barometrischen Höhenmessung bestehen, im Vergleich zu den vorgenannten Alternativen, beispielsweise bei langsamer Bewegung, zum Beispiel, bezogen auf ein Fahrzeug, während eines Staus, bei scharfem Verzögern oder starkem Beschleunigen oder bei Erschütterungen, zum Beispiel durch Schlaglöcher. Ferner ist die bei der Messung absoluter Höhenwerte durch einen Höhensensor in Form eines Barometers auftretende Fehlersummierung gegenüber der Erfassung relativer Messgrößen, zum Beispiel mit Beschleunigungssensoren, deutlich geringer.

Gemäß einer weiteren Ausgestaltung der Erfindung wird für jeden der Wegkandidaten eine von der Höhenänderungsabweichung abhängige erste Teilwahrscheinlichkeit dafür berechnet, dass der Wegkandidat der aktuell benutzte Weg ist. Eine weitere Ausgestaltung der Erfindung sieht vor, dass für jeden Wegkandidaten eine zweite Teilwahrscheinlichkeit dafür, dass der Wegkandidat der aktuell benutzte Weg ist, berechnet wird, wobei die zweite Teilwahrscheinlichkeit ein Maß für die Übereinstimmung der zweidimensionalen Verläufe des Wegabschnitts dieses Wegkandidaten und des Benutzertrajektorienabschnitts der Benutzertrajektorie ist. Vorzugsweise wird ferner für jeden Wegkandidaten aus der ersten Teilwahrscheinlichkeit und der zweiten Teilwahrscheinlichkeit eine Pfadwahrscheinlichkeit dafür, dass der Wegkandidat der aktuell benutzte Weg ist, berechnet.

Die aus den beiden Teilwahrscheinlichkeiten gebildete Pfadwahrscheinlichkeit ist ein besonders starkes Kriterium zur Beurteilung und Unterscheidung der Wegkandidaten hinsichtlich der Frage, ob einer der Wegkandidaten der aktuell benutzte Weg ist und welcher der Wegkandidaten dies gegebenenfalls ist, da in diese Pfadwahrscheinlichkeit neben den üblicherweise berücksichtigten zweidimensionalen Verläufen von Wegen auch deren Höhenprofile eingehen.

Eine weitere Ausgestaltung der Erfindung sieht vor, dass ein Wahrscheinlichkeitsschwellenwert vorgegeben wird und ein Wegkandidat dann als ein möglicher aktuell benutzter Weg betrachtet wird, wenn die für ihn berechnete Pfadwahrscheinlichkeit größer als der Wahrscheinlichkeitsschwellenwert ist. Dadurch wird mit einer geeigneten Vorgabe des Wahrscheinlichkeitsschwellenwertes vermieden, dass ein Wegkandidat als möglicher aktuell benutzter Weg bewertet wird, obwohl dies unwahrscheinlich ist.

Gemäß einer weiteren Ausgestaltung der Erfindung wird geprüft, ob eine aktuell von dem Navigationssystem zur Zielführung verwendete Route den Wegabschnitt eines Wegkandidaten, der als möglicher aktuell benutzter Weg betrachtet wird, aufweist. Wird ein solcher Wegabschnitt gefunden, wird der zugehörige Wegkandidat als aktuell benutzter Weg ausgewählt. Somit wird aus denjenigen Wegkandidaten, die als mögliche aktuelle benutzte Wege betrachtet werden, derjenige ausgewählt, dessen Wegabschnitt auf einer aktuell von dem Navigationssystem zur Zielführung verwendeten Route liegt, sofern ein solcher Wegkandidat existiert. Dadurch wird ein möglicherweise fehlerhafter und unnötiger Routenwechsel vermieden, falls mehrere Wegkandidaten mit einer ähnlich hohen Wahrscheinlichkeit, der aktuell benutzte Weg zu sein, ermittelt werden. Wird kein solcher Wegabschnitt gefunden, wird aus den Wegkandidaten, die als mögliche aktuell benutzte Wege betrachtet werden, derjenige Wegkandidat mit der höchsten Pfadwahrscheinlichkeit als aktuell benutzter Weg ausgewählt.

Das erfindungsgemäße Navigationssystem zum Bestimmen eines von einem Benutzer aktuell benutzten Wegs weist folgende Bestandteile auf: eine Messeinheit zur Erfassung von Messsignalen zur Änderung einer Benutzerhöhe, in der sich der Benutzer befindet, entlang einer Benutzertrajektorie, eine digitale Karte mit Informationen zu dreidimensionalen Verläufen von Wegen, eine Empfangseinheit, eingerichtet zum Empfangen von Signalen zur Positionsbestimmung, und eine Auswerteeinheit. Die Auswerteeinheit ist dazu ausgebildet, unter Verwendung der Signale zur Positionsbestimmung eine aktuelle ungefähre Benutzerposition des Benutzers zu ermitteln, anhand der digitalen Karte Wegkandidaten in einer Umgebung der ermittelten ungefähren Benutzerposition zu ermitteln, für jeden Wegkandidaten anhand der digitalen Karte ein Höhenprofil einer Weghöhe entlang eines Wegabschnitts des Wegkandidaten zu ermitteln, aus Messsignalen der Messeinheit einen Höhenänderungsverlauf einer Änderung einer Benutzerhöhe, in der sich der Benutzer befindet, entlang eines Benutzertrajektorienabschnitts einer Benutzertrajektorie des Benutzers zu ermitteln, und den aus den Messsignalen ermittelten Höhenänderungsverlauf mit den für die Wegkandidaten ermittelten Höhenprofilen zu vergleichen, um den aktuell benutzten Weg zu bestimmen, wobei zum Vergleich des Höhenänderungsverlaufs des Benutzertrajektorienabschnitts und der anhand der digitalen Karte ermittelten Höhenprofile der Wegkandidaten für jeden der Wegkandidaten eine Höhenänderungsabweichung des anhand der digitalen Karte ermittelten Höhenprofils von dem aus den Messsignalen ermittelten Höhenänderungsverlauf des Benutzertrajektorienabschnitts berechnet wird. Ein derartiges Navigationssystem ermöglicht die Durchführung des erfindungsgemäßen Verfahrens mit den oben genannten Vorteilen.

Ausführungsbeispiele der Erfindung werden im Folgenden anhand von Zeichnungen näher erläutert.

Darin zeigen:

Figur 1    ein Blockdiagramm eines in einem Fahrzeug angeordneten Navigationssystems,

Figur 2    eine Draufsicht auf Wegkandidaten in einer Umgebung einer ermittelten ungefähren Benutzerposition,

Figur 3    ein Flussdiagramm eines Verfahrens zur Ermittlung eines von einem Benutzer eines Navigationssystems aktuell benutzten Wegs, und

Figur 4    einen aus Messsignalen ermittelten Höhenänderungsverlauf eines Benutzertrajektorienabschnitts und anhand einer digitalen Karte ermittelte Höhenprofile von Wegabschnitten von Wegkandidaten.

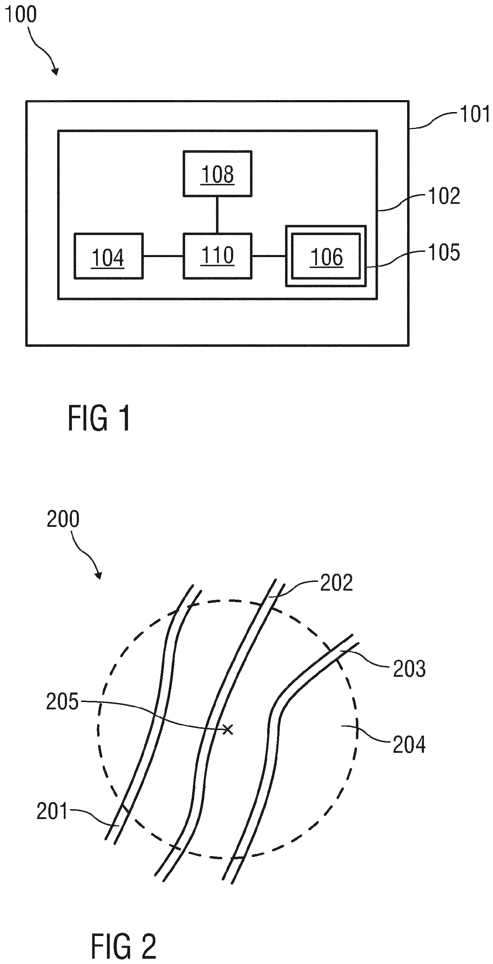

**Figur 1** zeigt ein Blockdiagramm einer Navigationsanordnung 100, die ein Fahrzeug 101 und ein in dem Fahrzeug 101 angeordnetes Navigationssystem 102 umfasst. Das Navigationssystem 102 weist eine Messeinheit 104 zur Erfassung von Messsignalen zur Änderung einer Benutzerhöhe, in der sich ein Benutzer des Navigationssystems 102 befindet, eine Speichereinheit 105, in welcher eine digitale Karte 106 mit Informationen zu dreidimensionalen Verläufen von Wegen abgelegt ist, eine Empfangseinheit 108, die zum Empfangen von Signalen zur Positionsbestimmung eingerichtet ist, und eine Auswerteeinheit 110 auf.

Das Navigationssystem 102 ist in dem Fahrzeug 101 fest eingebaut. Bei dem Fahrzeug 101 kann es sich um einen Personenkraftwagen handeln. Alternativ kann das Navigationssystem in oder an einem Fahrzeug so abgelegt oder angebracht sein, dass es leicht aus dem Fahrzeug beziehungsweise von dem Fahrzeug entnommen werden kann. Als eine weitere Alternative kann das Navigationssystem von einem Benutzer am Körper getragen werden.

Das Navigationssystem 102 weist eine Schnittstelle (nicht gezeigt) auf, mittels der eine Ausgabe einer Navigationsanweisung an einen Benutzer der Navigationseinrichtung erfolgt. Die Schnittstelle ist ferner eingerichtet, Eingaben des Benutzers entgegenzunehmen.

Die Messeinheit 104 ist als ein Höhensensor, insbesondere als ein Barometer, zur Erfassung von Messsignalen, aus denen die Benutzerhöhe ermittelbar ist, ausgebildet. Alternativ kann die Messeinheit als ein Sensor zur Erfassung einer Drehwinkelbeschleunigung oder Richtungsbeschleunigung des Benutzers in vertikaler Richtung ausgebildet sein.

Die Speichereinheit 105 verfügt über einen nichtflüchtigen Speicher in Form eines EEPROMs (Electrically Erasable Programmable Read-Only Memory). Alternativ dazu kann die Speichereinheit auch eine andere Form von Speicher aufweisen, zum Beispiel einen Flash-EEPROM oder eine Festplatte. Ferner kann die Speichereinheit über mehrere der genannten Speicher verfügen. In der Speichereinheit 105 ist die digitale Karte 106 abgelegt.

Die digitale Karte 106 weist Informationen zu zweidimensionalen Verläufen von Wegen sowie zu absoluten Weghöhen und/oder zu Steigungen der Wege auf.

Die Empfangseinheit 108 ist zum Empfangen von Signalen ausgebildet, die von Satelliten zur Positionsbestimmung ausgesendet werden. Die Empfangseinheit kann als ein Empfänger für GPS-Signale (Global Positioning System, Globales Positionsbestimmungssystem) ausgebildet sein. Alternativ kann die Empfangseinheit als ein Empfänger für Signale anderer Satellitennavigationssysteme wie GLONASS, COMPASS oder GALILEO eingerichtet sein.

Die Auswerteeinheit 110 ist die zentrale Steuereinheit des Navigationssystems. Sie verfügt neben einem Prozessor (Central Processing Unit, CPU) über einen Arbeitsspeicher (Random Access Memory, RAM), welcher zum flüchtigen Speichern von Variablen und Zwischenergebnissen dient. Der Prozessor und der Arbeitsspeicher sind auf einem integrierten Schaltkreis vereinigt. Alternativ dazu können der Prozessor und der Arbeitsspeicher separat voneinander angeordnet sein, zum Beispiel jeweils auf einem anderen integrierten Schaltkreis. Die Auswerteeinheit 110 ist über Datenleitungen mit der Messeinheit 104, der Speichereinheit 105 und der Empfangseinheit 108 verbunden.

Die Auswerteeinheit 110 ist zum Ermitteln einer aktuellen ungefähren Benutzerposition des Benutzers unter Verwendung von Signalen zur Positionsbestimmung, zum Ermitteln von Wegkandidaten in einer Umgebung der ungefähren Benutzerposition anhand der digitalen Karte, zum Ermitteln eines Höhenprofils einer Weghöhe entlang eines Wegabschnitts eines Wegkandidaten für jeden der Wegkandidaten anhand der digitalen Karte, zum Ermitteln eines Höhenänderungsverlaufs einer Änderung einer Benutzerhöhe, in der sich der Benutzer befindet, entlang eines Benutzertrajektorienabschnitts einer Benutzertrajektorie des Benutzers aus Messsignalen der Messeinheit 104 und zum Vergleichen des aus den Messsignalen ermittelten Höhenänderungsverlaufs mit den für die Wegkandidaten ermittelten Höhenprofilen, so dass der aktuell benutzte Weg bestimmt wird, eingerichtet.

**Figur 2** zeigt beispielhaft ein Gebiet 200 mit drei Wegkandidaten 201, 202, 203 in einer kreisförmigen Umgebung 204, in deren Mittelpunkt eine ungefähre Benutzerposition 205 liegt. Statt einer kreisförmigen Umgebung kann auch eine anders geformte Umgebung, beispielsweise eine rechteckige Umgebung, verwendet werden.

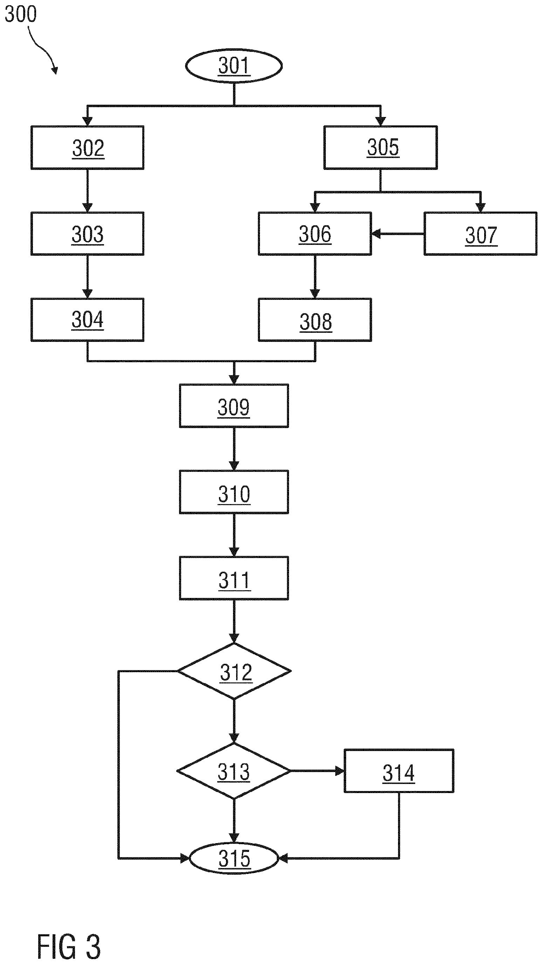

**Figur 3** zeigt ein Flussdiagramm 300 eines Verfahrens mit den Verfahrensschritten 301 bis 315 zur Ermittlung eines von dem Benutzer des Navigationssystems 102 aktuell benutzten Wegs mittels des Navigationssystems 102.

Bei dem Verfahrensschritt 301 wird das Verfahren entweder automatisch, beispielsweise bei einem Start des Fahrzeugs 101, oder durch eine Bedienung des Navigationssystems 102 durch den Benutzer initialisiert.

Bei dem Verfahrensschritt 302 wird durch die Auswerteeinheit 110 die aktuelle ungefähre Benutzerposition 205 des Benutzers durch Auswertung von Signalen zur Positionsbestimmung, die von der Empfangseinheit 108 empfangen werden, und/oder durch eine Koppelortung ermittelt.

Bei dem Verfahrensschritt 303 werden durch die Auswerteeinheit 110 anhand der digitalen Karte 106 die Wegkandidaten 201 bis 203 in der Umgebung 204 der ungefähren Benutzerposition 205 ermittelt. Die Umgebung 204 der ungefähren Benutzerposition 205 wird durch einen vorgegebenen Radius definiert, so dass die Umgebung 204 einen Kreis um die ungefähre Benutzerposition 205 mit dem vorgegebenen Radius bildet.

Ferner werden unter Verwendung der Auswerteeinheit 110 anhand der digitalen Karte 106 die durch diese Umgebung 204 verlaufenden Wege als die Wegkandidaten 201 bis 203 ermittelt. Bei den Wegkandidaten 201 bis 203 handelt es sich um Wege, welche durch die Umgebung 204 verlaufen.

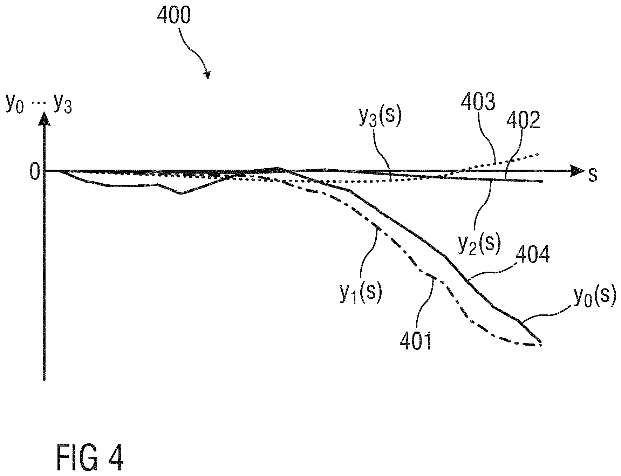

Bei dem Verfahrensschritt 304 wird für jeden der Wegkandidaten 201 bis 203 aus den in der digitalen Karte 106 angegebenen absoluten Weghöhen und/oder Steigungen ein Höhenprofil 401 bis 403 (siehe Figur 4) einer Weghöhe entlang eines Wegabschnitts des Wegkandidaten 201 bis 203 ermittelt. Als Wegabschnitte werden zueinander korrespondierende Abschnitte der Wegkandidaten 201 bis 203 gewählt, die jeweils eine vorgebbare Länge, beispielsweise 500 m, aufweisen und an einem Ort des jeweiligen Wegkandidaten 201 bis 203 enden, der einen kleinsten Abstand von der ermittelten ungefähren Benutzerposition 205 hat.

Parallel zu den Verfahrensschritten 302 bis 304 werden die Verfahrensschritte 305 bis 308 ausgeführt.

Bei dem Verfahrensschritt 305 werden entlang einer Benutzertrajektorie des Benutzers mittels der Messeinheit 104 laufend Messsignale zur Änderung einer Benutzerhöhe, in der sich der Benutzer befindet, erfasst.

Bei dem Verfahrensschritt 306 werden die aus den erfassten Messsignalen gebildeten Messwerte mittels eines Kalman-Filters zur Kompensation eines Messrauschens und von Messfehlern gefiltert. Ferner wird eine hierfür benötigte Messvarianz für die Messwerte bei dem Verfahrensschritt 307 laufend zum Zweck der Online-Kalibrierung der Messeinheit 104 aktualisiert.

Bei dem Verfahrensschritt 308 wird aus den gefilterten Messwerten der Höhenänderungsverlauf 404 (vgl. Figur 4) der Änderung der Benutzerhöhe entlang eines Benutzertrajektorienabschnitts der Benutzertrajektorie ermittelt. Als Benutzertrajektorienabschnitt wird dabei ein Abschnitt der Benutzertrajektorie gewählt, der die gleiche Länge wie die Wegabschnitte der Wegkandidaten 201 bis 203 hat und dessen Ende zu der Zeit erreicht wird, zu der die ungefähre Benutzerposition 205 ermittelt wird.

Da die Messeinheit 104 als ein Höhensensor, insbesondere als ein Barometer, ausgebildet ist, werden zur Ermittlung des Höhenänderungsverlaufs 404 (vgl. Figur 4) zeitlich aufeinander folgend Messsignale der Messeinheit 104 erfasst. Ferner werden aus den Messsignalen mittels des Kalman-Filters gefilterte Benutzerhöhen der Benutzertrajektorie ermittelt. Aus den auf diese Weise ermittelten Benutzerhöhen werden Höhenänderungen der Benutzerhöhe in Abhängigkeit von der Zeit ermittelt. Gleichzeitig mit den Benutzerhöhen werden Benutzergeschwindigkeiten des Benutzers ermittelt und anhand der Benutzergeschwindigkeiten werden die zeitlichen Höhenänderungen der Benutzerhöhe in den Höhenänderungsverlauf 404 (vgl. Figur 4) der Änderung der Benutzerhöhe entlang des Benutzertrajektorienabschnitts umgerechnet.

**Figur 4** zeigt beispielhaft in einem Höhendiagramm 400 den bei dem Verfahrensschritt 308 ermittelten Höhenänderungsverlauf 404 entlang des Benutzertrajektorienabschnitts und dazu korrespondierende, bei dem Verfahrensschritt 304 anhand der digitalen Karte ermittelte Höhenprofile 401 bis 403 entlang der Wegabschnitte der drei Wegkandidaten 201 bis 203. Der Höhenänderungsverlauf 404 ist in Form einer relativen Benutzerhöhe $y_0$ als eine Funktion $y_0(s)$ von einer Bogenlänge s einer entlang des Benutzertrajektorienabschnitts verlaufenden Kurve dargestellt, wobei $y_0$ eine Differenz der Benutzerhöhe zu einer Anfangshöhe des Benutzertrajektorienabschnitts bezeichnet. Die Höhenprofile 401 bis 403 sind entsprechend jeweils in Form einer relativen Weghöhe $y_K$ als eine Funktion $y_K(s)$ von einer Bogenlänge s einer entlang des jeweiligen Wegabschnitts verlaufenden Kurve dargestellt, wobei der Index K=1, 2, 3 die verschiedenen Höhenprofile 401 bis 403 nummeriert und $y_K$ eine Differenz der Weghöhe zu einer Anfangshöhe des jeweiligen Wegabschnitts bezeichnet.

Bei einem Verfahrensschritt 309 wird für jeden Wegkandidaten 201 bis 203 eine erste Teilwahrscheinlichkeit $V_K$ dafür, dass der Wegkandidat 201 bis 203 der aktuell benutzte Weg ist, berechnet. Dazu werden gemäß

$$RMSE_K = \sqrt{\frac{\sum_{i=1}^{n}(y_K(s_i) - y_0(s_i))^2}{n}} \quad , \qquad [1]$$

$$CORR_K = \frac{\sum_{i=1}^{n} y_K(s_i)\, y_0(s_i)}{\sqrt{\sum_{i=1}^{n}(y_K(s_i))^2}\,\sqrt{\sum_{i=1}^{n}(y_0(s_i))^2}} \qquad [2]$$

eine mittlere quadratische Abweichung $RMSE_K$ des jeweiligen Höhenprofils 401 bis 403 von dem Höhenänderungsverlauf 404 und ein korrespondierender Korrelationskoeffizient $CORR_K$ berechnet, wobei $s_i$ durch einen Index i=1,...,n nummerierte Stützstellen der Bogenlänge s sind, an denen relative Benutzerhöhen $y_0(s_i)$ und relative Weghöhen $y_K(s_i)$ ausgewertet werden. Aus der mittleren quadratischen Abweichung $RMSE_K$ und dem Korrelationskoeffizient $CORR_K$ wird gemäß

$$d_K = (1{,}75 - CORR_K)\, RMSE_K \qquad [3]$$

eine Höhenänderungsabweichung $d_K$ berechnet. Aus der Höhenänderungsabweichung $d_K$ wird eine Höhenänderungsähnlichkeit $S_K$ gemäß

$$S_K = 1 - \frac{d_K}{D} \qquad [4]$$

berechnet, wobei D eine vorgegebene maximale Höhenänderungsabweichung ist, die zum Beispiel D = 1000 beträgt. Aus der Höhenänderungsähnlichkeit $S_K$ wird die erste Teilwahrscheinlichkeit $V_K$ gemäß einer Gaußgewichtung

$$V_K = e^{-\frac{1}{2}\left(\frac{S_K - \mu}{\sigma}\right)^2} \qquad [5]$$

berechnet, wobei $\mu$ einen Mittelwert der Gaußgewichtung bezeichnet, der typischerweise etwa den Wert Eins annimmt, und $\sigma$ eine Standardabweichung bezeichnet, die zwischen dem Wert Null und dem Wert von $\mu$ liegt.

Beispielsweise ist in der in Figur 4 dargestellten Situation die auf diese Weise ermittelte erste Teilwahrscheinlichkeit $V_1$ für das Höhenprofil 401 wesentlich höher als die ersten Teilwahrscheinlichkeiten $V_2$ und $V_3$ für die Höhenprofile 402 und 403, da die relative Weghöhe $y_1(s)$ wesentlich besser als die relativen Weghöhen $y_2(s)$ und $y_3(s)$ mit der relativen Benutzerhöhe $y_0(s)$ des Höhenänderungsverlaufs 404 übereinstimmt.

Bei einem Verfahrensschritt 310 wird für jeden Wegkandidaten 201 bis 203 eine Pfadwahrscheinlichkeit $W_K$ dafür, dass der Wegkandidat 201 bis 203 der aktuell benutzte Weg ist, berechnet.

Dazu wird eine zweite Teilwahrscheinlichkeit $H_K$ dafür, dass der Wegkandidat 201 bis 203 der aktuell benutzte Weg ist, berechnet. Die zweite Teilwahrscheinlichkeit $H_K$ für einen Wegkandidaten 201 bis 203 ist ein Maß für die Übereinstimmung der zweidimensionalen Verläufe des Wegabschnitts dieses Wegkandidaten 201 bis 203 und des Benutzertrajektorienabschnitts der Benutzertrajektorie. Unter dem zweidimensionalen Verlauf eines Wegkandidaten 201 bis 203 beziehungsweise der Benutzertrajektorie wird dabei der in eine Ebene projizierte Verlauf bezeichnet, der die Weghöhe beziehungsweise die Benutzerhöhe nicht berücksichtigt. Der zweidimensionale Verlauf des Wegabschnitts eines Wegkandidaten 201 bis 203 wird dabei von der Auswerteeinheit 110 anhand der digitalen Karte 106 ermittelt. Der zweidimensionale Verlauf des Benutzertrajektorienabschnitts der Benutzertrajektorie wird, wie die aktuellen ungefähren Benutzerpositionen 205 des Benutzers, durch Auswertung von Signalen zur Positionsbestimmung, die von der Empfangseinheit 108 empfangen werden, und/oder durch eine Koppelortung ermittelt. Vorzugsweise wird der zweidimensionale Verlauf des Benutzertrajektorienabschnitts der Benutzertrajektorie gemeinsam mit oder aus den aktuellen ungefähren Benutzerpositionen 205 des Benutzers ermittelt. Die Pfadwahrscheinlichkeit $W_K$ dafür, dass ein Wegkandidat 201 bis 203 der aktuell benutzte Weg ist, wird aus den Teilwahrscheinlichkeiten $V_K$ und $H_K$ gemäß

$$W_K = H_K \, V_K \qquad\qquad [6]$$

berechnet.

Bei einem Verfahrensschritt 311 werden die für die Wegkandidaten 201 bis 203 ermittelten Pfadwahrscheinlichkeiten mit einem vorgebbaren Wahrscheinlichkeitsschwellenwert verglichen. Ein Wegkandidat 201 bis 203 wird als ein möglicher aktuell benutzter Weg beurteilt, wenn die für ihn berechnete Pfadwahrscheinlichkeit $W_K$ größer als ein vorgegebener Wahrscheinlichkeitsschwellenwert ist.

Bei einem Verfahrensschritt 312 wird geprüft, ob bei dem Verfahrensschritt 311 ein Wegkandidat 201 bis 203 als ein möglicher aktuell benutzter Weg beurteilt wurde. Wenn dies nicht der Fall ist, wird das Verfahren mit einem Verfahrensschritt 315 beendet; andernfalls wird ein Verfahrensschritt 313 ausgeführt.

Bei dem Verfahrensschritt 313 wird geprüft, ob eine aktuell von dem Navigationssystem 102 zur Zielführung verwendete Route den Wegabschnitt eines Wegkandidaten 201 bis 203, der als möglicher aktuell benutzter Weg beurteilt wird, aufweist. Wenn dies der Fall der ist, wird der betreffende Wegkandidat 201 bis 203 als aktuell benutzter Weg ausgewählt und das Verfahren mit dem Verfahrensschritt 315 beendet; andernfalls wird ein Verfahrensschritt 314 ausgeführt.

Bei dem Verfahrensschritt 314 wird unter den Wegkandidaten 201 bis 203, die als mögliche aktuell benutzte Wege beurteilt werden, derjenige Wegkandidat 201 bis 203 mit der höchsten Pfadwahrscheinlichkeit $W_K$ als aktuell benutzter Weg ausgewählt. Falls das Navigationssystem 102 momentan eine Zielführung zu einem Navigationsziel ausführt, wird eine Neuberechnung einer Route zu dem Navigationsziel angestoßen, die von dem Wegabschnitt des Wegkandidaten 201 bis 203 mit der höchsten Pfadwahrscheinlichkeit $W_K$ ausgeht. Anschließend wird das Verfahren mit dem Verfahrensschritt 315 beendet.

Der ermittelte aktuell benutzte Weg wird vorzugsweise zu einer Korrektur der in dem Verfahrensschritt 302 ermittelten aktuellen ungefähren Benutzerposition 205 des Benutzers verwendet, falls diese Benutzerposition 205 nicht auf dem ermittelten aktuell benutzten Weg liegt.

**Patentansprüche**

1. Verfahren zum Bestimmen eines von einem Benutzer eines Navigationssystems (102) aktuell benutzten Wegs, wobei mittels des Navigationssystems (102)

   - eine digitale Karte (106) mit Informationen zu dreidimensionalen Verläufen von Wegen gespeichert wird,
   - eine aktuelle ungefähre Benutzerposition (205) des Benutzers ermittelt wird,
   - anhand der digitalen Karte (106) Wegkandidaten (201, 202, 203) in einer Umgebung (204) der ungefähren Benutzerposition (205) ermittelt werden,
   - für jeden der Wegkandidaten (201, 202, 203) anhand der digitalen Karte (106) ein Höhenprofil (401, 402, 403) einer Weghöhe entlang eines Wegabschnitts des Wegkandidaten (201, 202, 203) ermittelt wird,
   - entlang einer Benutzertrajektorie des Benutzers Messsignale zur Änderung einer Benutzerhöhe, in der sich der Benutzer befindet, erfasst werden,
   - aus den Messsignalen ein Höhenänderungsverlauf (404) der Änderung der Benutzerhöhe entlang eines Benutzertrajektorienabschnitts der Benutzertrajektorie ermittelt wird,
   - und der Höhenänderungsverlauf (404) mit den Höhenprofilen (401, 402, 403) verglichen wird, so dass der aktuell benutzte Weg bestimmt wird, wobei zum Vergleich des Höhenänderungsverlaufs (404) des Benutzertrajektorienabschnitts und der anhand der digitalen Karte (106) ermittelten Höhenprofile (401, 402, 403) der Wegkandidaten (201, 202, 203) für jeden der Wegkandidaten (201, 202, 203) eine Höhenänderungsabweichung des anhand der digitalen Karte (106) ermittelten Höhenprofils (401, 402, 403) von dem aus den Messsignalen ermittelten Höhenänderungsverlauf (404) des Benutzertrajektorienabschnitts berechnet wird.

2. Verfahren gemäß Anspruch 1,
**dadurch gekennzeichnet, dass** zur Ermittlung des Höhenänderungsverlaufs (404) des Benutzertrajektorienabschnitts an verschiedenen Orten der Benutzertrajektorie jeweils ein Messsignal eines Höhensensors erfasst wird, wobei die erfassten Messsignale mittels eines Kalman-Filters zur Kompensation eines Messrauschens und von Messfehlern bearbeitet werden, und aus den gefilterten Messwerten Höhenänderungen der Benutzerhöhe ermittelt werden.

3. Verfahren nach einem der vorhergehenden Ansprüche,
**dadurch gekennzeichnet, dass** für jeden Wegkandidaten (201, 202, 203) eine von der berechneten Höhenänderungsabweichung abhängige erste Teilwahrscheinlichkeit dafür, dass der Wegkandidat (201, 202, 203) der aktuell benutzte Weg ist, berechnet wird.

4. Verfahren nach einem der vorhergehenden Ansprüche,
**dadurch gekennzeichnet, dass** für jeden Wegkandidaten (201, 202, 203) eine zweite Teilwahrscheinlichkeit dafür, dass der Wegkandidat (201, 202, 203) der aktuell benutzte Weg ist, berechnet wird, wobei die zweite Teilwahrscheinlichkeit ein Maß für die Übereinstimmung der zweidimensionalen Verläufe des Wegabschnitts dieses Wegkandidaten (201, 202, 203) und des Benutzertrajektorienabschnitts der Benutzertrajektorie ist.

5. Verfahren nach den Ansprüchen 3 und 4,
**dadurch gekennzeichnet, dass** für jeden Wegkandidaten (201, 202, 203) aus der ersten Teilwahrscheinlichkeit und der zweiten Teilwahrscheinlichkeit eine Pfadwahrscheinlichkeit dafür, dass der Wegkandidat (201, 202, 203) der aktuell benutzte Weg ist, berechnet wird.

6. Verfahren nach Anspruch 5,
**dadurch gekennzeichnet, dass** ein Wahrscheinlichkeitsschwellenwert vorgegeben wird und ein Wegkandidat (201, 202, 203) als ein möglicher aktuell benutzter Weg betrachtet wird, wenn die für ihn berechnete Pfadwahrscheinlichkeit größer als der Wahrscheinlichkeitsschwellenwert ist.

7. Verfahren nach Anspruch 6,
**dadurch gekennzeichnet, dass** geprüft wird, ob eine aktuell von dem Navigationssystem (102) zur Zielführung verwendete Route den Wegabschnitt eines der Wegkandidaten (201, 202, 203), der als möglicher aktuell benutzter Weg betrachtet wird, aufweist, und dass, falls ein solcher Wegabschnitt gefunden wird, der zugehörige Wegkandidat (201, 202, 203) als aktuell benutzter Weg ausgewählt wird, und andernfalls unter den Wegkandidaten (201, 202, 203), die als mögliche aktuell benutzte Wege betrachtet werden, derjenige Wegkandidat (201, 202, 203) mit der höchsten Pfadwahrscheinlichkeit als aktuell benutzter Weg ausgewählt wird.

8. Verfahren nach einem der vorhergehenden Ansprüche,
**dadurch gekennzeichnet, dass** eine Wegabschnittslänge vorgegeben wird und als Wegabschnitte zueinander korrespondierende Abschnitte der Wegkandidaten (201, 202, 203) gewählt werden, deren Länge jeweils die vorgegebene Wegabschnittslänge ist und die jeweils an einem Ort des jeweiligen Wegkandidaten (201, 202, 203) enden, der einen kleinsten Abstand von der ermittelten ungefähren Benutzerposition (205) hat.

9. Verfahren nach Anspruch 8,
**dadurch gekennzeichnet, dass** als Benutzertrajektorienabschnitt ein Abschnitt der Benutzertrajektorie gewählt wird, dessen Länge die vorgegebene Wegabschnittslänge ist und dessen Ende zu einer Zeit erreicht wird, zu der die ungefähre Benutzerposition (205) ermittelt wird.

10. Navigationssystem (102) zum Bestimmen eines von einem Benutzer des Navigationssystems (102) aktuell benutzten Wegs, welches aufweist

- eine Messeinheit (104), eingerichtet zur Erfassung von Messsignalen zur Änderung einer Benutzerhöhe, in der sich der Benutzer befindet, entlang einer Benutzertrajektorie des Benutzers,
- eine digitale Karte (106) mit Informationen zu dreidimensionalen Verläufen von Wegen,
- eine Empfangseinheit (108), eingerichtet zum Empfangen von Signalen zur Positionsbestimmung,
- und eine Auswerteeinheit (110), die dazu ausgebildet ist, unter Verwendung der Signale eine aktuelle ungefähre Benutzerposition (205) des Benutzers zu ermitteln,

- anhand der digitalen Karte (106) Wegkandidaten (201, 202, 203) in einer Umgebung (204) der ungefähren Benutzerposition (205) zu ermitteln,
- für jeden der Wegkandidaten (201, 202, 203) anhand der digitalen Karte (106) ein Höhenprofil (401, 402, 403) einer Weghöhe entlang eines Wegabschnitts des Wegkandidaten (201, 202, 203) zu ermitteln,
- aus Messsignalen der Messeinheit (104) einen Höhenänderungsverlauf (404) einer Änderung einer Benutzerhöhe, in der sich der Benutzer befindet, entlang eines Benutzertrajektorienabschnitts der Benutzertrajektorie zu ermitteln,
- und den Höhenänderungsverlauf (404) mit den Höhenprofilen (401, 402, 403) zu vergleichen, so dass der aktuell benutzte Weg bestimmt wird, wobei zum Vergleich des Höhenänderungsverlaufs (404) des Benutzertrajektorienabschnitts und der anhand der digitalen Karte (106) ermittelten Höhenprofile (401, 402, 403) der Wegkandidaten (201, 202, 203) für jeden der Wegkandidaten (201, 202, 203) eine Höhenänderungsabweichung des anhand der digitalen Karte (106) ermittelten Höhenprofils (401, 402, 403) von dem aus den Messsignalen ermittelten Höhenänderungsverlauf (404) des Benutzertrajektorienabschnitts berechnet wird.

**Claims**

1. Method for determining a path currently used by a user of a navigation system (102), whereby by means of the navigation system (102)

   - a digital map (106) with information about three-dimensional progressions of paths is stored,
   - a current approximate user position (205) of the user is ascertained,
   - by reference to the digital map (106) path nominees (201, 202, 203) in an environment (204) of the approximate user position (205) are ascertained,
   - for each of the path nominees (201, 202, 203) by reference to the digital map (106) an elevation profile (401, 402, 403) of a path level along a path section of the path nominee (201, 202, 203) is ascertained,
   - along a user trajectory of the user measuring signals for an amendment of a user elevation, in which the user is located, are gathered,
   - from the measuring signals an elevation amendment progression (404) of the amendment to a user elevation along a user trajectory section of the user trajectory is ascertained,
   - and the elevation amendment progression (404) is compared with the elevation profiles (401, 402, 403), such that the path currently used is ascertained, whereby for a comparison of the elevation amendment progression (404) of the user trajectory section and the elevation profiles (401, 402, 403) of the path nominees (201, 202, 203) ascertained by reference to the digital map (106) for each path nominee (201, 202, 203) an elevation amendment deviation of the elevation profile (401, 402, 403) ascertained by reference to the digital map (106) to the elevation amendment progression (404) of the user trajectory section ascertained from the measuring signals is calculated.

2. Method according to claim 1,
   **characterized in that** for determining the elevation amendment progression (404) of the user trajectory section at various locations of the user trajectory each a measuring signal of an elevation sensor is gathered, whereby the gathered measuring signals are processed by means of a Kalman-Filter to compensate a measurement noise and measuring errors, and elevation amendments of the user elevation are ascertained from the filtered measured values.

3. Method according to one of the proceeding claims,
   **characterized in that** for each path nominee (201, 202, 203) a first partial-likelihood depending on the calculated elevation amendment deviation is calculated therefor, that the path nominee (201, 202, 203) is the path currently used.

4. Method according to one of the proceeding claims,
   **characterized in that** for each path nominee (201, 202, 203) a second partial-likelihood is calculated therefor, that the path nominee (201, 202, 203) is the path currently used, whereby the second partial-likelihood is a degree of alignment of the two-dimensional progressions of the path nominee's (201, 202, 203) path section and the user trajectory's user trajectory section.

5. Method according to claims 3 and 4,
   **characterized in that** for each path nominee (201, 202, 203) a path likelihood from the first partial-likelihood and the second partial-likelihood is calculated therefor, that the path nominee (201, 202, 203) is the path currently used.

6. Method according to claim 5,
**characterized in that** a likelihood threshold is specified and a path nominee (201, 202, 203) is considered as a potential path currently used, if the calculated path likelihood for it exceeds the likelihood threshold.

7. Method according to claim 6,
**characterized in that** is checked, if a route currently used by the navigation system (102) for guidance features the path section of one of the path nominees (201, 202, 203), which is considered as potential path currently used, and that, if such a path section is detected, the related path nominee (201, 202, 203) is chosen as the path currently used, and otherwise among the path nominees (201, 202, 203), which are considered as potential paths currently used, that path nominee (201, 202, 203) with the highest path likelihood is chosen as path currently used.

8. Method according to one of the proceeding claims,
**characterized in that** a path section length is specified and sections of the path nominees (201, 202, 203) corresponding to each other are picked as path sections, whose length is respectively the specified path section length and whose respectively ends at a location of the respective path nominee (201, 202, 203), which has a smallest distance to the ascertainded approximate user position (205).

9. Method according to claim 8,
**characterized in that** a section of the user trajectory is chosen as user trajectory section, whose length is the specified path section length and whose end is reached at a time, at which the approximate user position (205) is ascertained.

10. Navigation system (102) for determining a path currently used by a user of the navigation system (102), which features

- a measuring unit (104), configured for gathering measuring signals for an amendment of a user elevation, in which the user is located, along a user trajectory of the user,
- a digital map (106) with information about three-dimensional progressions of paths,
- a receiving unit (108), configured for receiving signals for positioning,
- and an evaluation unit (110), which is configured thereto, to ascertain a current approximate user position (205) of the user using the signals,
- to ascertain path nominees (201, 202, 203) in an environment (204) of the approximate user position (205) by reference to the digital map (106),
- to ascertain for each path nominee (201, 202, 203) an elevation profile (401, 402, 403) of a path level along a path section of the path nominee (201, 202, 203) by reference to the digital map (106),
- to ascertain an elevation amendment progression (404) of an amendment of a user elevation, in which the user is located, along a user trajectory section of the user trajectory from measuring signals of the measuring unit (104),
- and to compare the elevation amendment progression (404) with the elevation profiles (401, 402, 403), such that the path currently used is determined, whereby for comparing the elevation amendment progression (404) of the user trajectory section and the elevation profiles (401, 402, 403) of the path nominees (201, 202, 203) ascertained by reference to the digital map (106) for each path nominee (201, 202, 203) an elevation amendment deviation of the elevation profile (401, 402, 403) ascertained by reference to the digital map (106) to the elevation amendment progression (404) of the user trajectory section ascertained from the measuring signals is calculated.

**Revendications**

1. Procédé permettant de déterminer le chemin actuellement emprunté par l'utilisateur d'un système de navigation (102), le système de navigation (102) étant utilisé pour

- enregistrer une carte numérique (106) avec des informations de tracé tridimensionnel des chemins,
- déterminer approximativement la position actuelle de l'utilisateur (205),
- déterminer des chemins candidats (201, 202, 203) à partir de la carte numérique (106) dans un périmètre (204) de la position approximative de l'utilisateur (205),
- déterminer un profil d'altitude (401, 402, 403) du chemin le long d'un tronçon du chemin candidat (201, 202, 203) pour chaque chemin candidat (201, 202, 203) à partir de la carte numérique (106),
- enregistrer des signaux de mesure le long de la trajectoire de l'utilisateur pour modifier l'altitude à laquelle se trouve l'utilisateur,

- déterminer une courbe de variation d'altitude (404) de l'utilisateur le long d'un tronçon de la trajectoire de l'utilisateur à partir des signaux de mesure et

- comparer la courbe de variation d'altitude (404) et les profils d'altitude (401, 402, 403) de manière à déterminer le chemin actuellement emprunté, la comparaison de la courbe de variation d'altitude (404) du tronçon de la trajectoire de l'utilisateur et des profils d'altitude (401, 402, 403) déterminés à partir de la carte numérique (106) pour les chemins candidats (201, 202, 203) étant basée sur un écart de variation d'altitude du profil d'altitude (401, 402, 403) déterminé à partir de la carte numérique (106), calculé pour chaque chemin candidat (201, 202, 203) à partir de la courbe de variation d'altitude (404) déterminée à partir des signaux de mesure pour le tronçon de la trajectoire de l'utilisateur.

2. Procédé selon la revendication 1,
   **caractérisé en ce qu'**un signal de mesure d'un altimètre est enregistré en plusieurs endroits de la trajectoire de l'utilisateur pour déterminer la courbe de variation d'altitude (404) du tronçon de la trajectoire de l'utilisateur, les signaux de mesure enregistrés étant traités avec un filtre de Kalman pour compenser le bruit et les erreurs de mesure, les valeurs de mesure filtrées étant ensuite utilisées pour déterminer les variations d'altitude de l'utilisateur.

3. Procédé selon l'une des revendications précédentes,
   **caractérisé en ce que**, pour chaque chemin candidat (201, 202, 203), une première probabilité partielle que le chemin candidat (201, 202, 203) est le chemin actuellement emprunté est calculée, la probabilité partielle étant dépendante de la courbe de variation d'altitude calculée.

4. Procédé selon l'une des revendications précédentes,
   **caractérisé en ce que**, pour chaque chemin candidat (201, 202, 203), une deuxième probabilité partielle que le chemin candidat (201, 202, 203) est le chemin actuellement emprunté est calculée, la deuxième probabilité partielle étant un indicateur de concordance des tracés bidimensionnels du tronçon de ce chemin candidat (201, 202, 203) et du tronçon de la trajectoire de l'utilisateur.

5. Procédé selon les revendications 3 et 4,
   **caractérisé en ce que**, pour chaque chemin candidat (201, 202, 203), une probabilité de cheminement que le chemin candidat (201, 202, 203) est le chemin actuellement emprunté est calculée à partir de la première probabilité partielle et de la deuxième probabilité partielle.

6. Procédé selon la revendication 5,
   **caractérisé en ce qu'**un seuil de probabilité est spécifié et qu'un chemin candidat (201, 202, 203) est considéré comme étant potentiellement le chemin actuellement emprunté si la probabilité de cheminement calculée pour ce chemin est supérieure au seuil de probabilité.

7. Procédé selon la revendication 6,
   **caractérisé en ce qu'**un contrôle est effectué pour vérifier si l'itinéraire actuellement utilisé par le système de navigation (102) pour atteindre le but inclut le tronçon de l'un des chemins candidats (201, 202, 203), qui est considéré comme étant potentiellement le chemin actuellement emprunté, et **en ce que**, si un tel tronçon de chemin est trouvé, le chemin candidat (201, 202, 203) correspondant est choisi comme chemin actuellement emprunté, sinon le chemin candidat (201, 202, 203) ayant la probabilité de cheminement la plus élevée parmi les chemins candidats (201, 202, 203) considérés comme étant potentiellement des chemins actuellement utilisés est choisi comme chemin actuellement emprunté.

8. Procédé selon l'une des revendications précédentes,
   **caractérisé en ce qu'**une longueur de tronçon de chemin est spécifiée et que des tronçons des chemins candidats (201, 202, 203) sont choisis, ces tronçons correspondant entre eux, ayant la longueur de tronçon de chemin spécifiée et se terminant à un endroit du chemin candidat (201, 202, 203) en question, cet endroit étant le plus près de la position de l'utilisateur (205) déterminée approximativement.

9. Procédé selon la revendication 8,
   **caractérisé en ce qu'**un tronçon de la trajectoire de l'utilisateur est choisi, ce tronçon ayant la longueur de tronçon de chemin spécifiée et sa fin étant atteinte à l'instant où la position approximative de l'utilisateur (205) est déterminée.

10. Système de navigation (102) utilisé pour déterminer le chemin actuellement emprunté par l'utilisateur du système de navigation (102), le système comportant

- une unité de mesure (104) configurée pour enregistrer des signaux de mesure de la variation de l'altitude à laquelle se trouve l'utilisateur le long de sa trajectoire,
- une carte numérique (106) contenant des informations de tracé tridimensionnel des chemins,
- une unité de réception (108) configurée pour recevoir des signaux pour déterminer la position et
- une unité de traitement (110) configurée pour déterminer la position approximative et actuelle de l'utilisateur (205) à partir des signaux,
- déterminer des chemins candidats (201, 202, 203) à partir de la carte numérique (106) dans un périmètre (204) de la position approximative de l'utilisateur (205),
- déterminer un profil d'altitude (401, 402, 403) du chemin le long d'un tronçon du chemin candidat (201, 202, 203) pour chaque chemin candidat (201, 202, 203) à partir de la carte numérique (106),
- déterminer une courbe de variation d'altitude (404) de l'utilisateur le long d'un tronçon de la trajectoire de l'utilisateur à partir des signaux de mesure de l'unité de mesure (104) et
- comparer la courbe de variation d'altitude (404) et les profils d'altitude (401, 402, 403) de manière à déterminer le chemin actuellement emprunté, la comparaison de la courbe de variation d'altitude (404) du tronçon de la trajectoire de l'utilisateur et des profils d'altitude (401, 402, 403) déterminés à partir de la carte numérique (106) pour les chemins candidats (201, 202, 203) étant basée sur un écart de variation d'altitude du profil d'altitude (401, 402, 403) déterminé à partir de la carte numérique (106), calculé pour chaque chemin candidat (201, 202, 203) à partir de la courbe de variation d'altitude (404) déterminée à partir des signaux de mesure pour le tronçon de la trajectoire de l'utilisateur.

FIG 1

FIG 2

300

FIG 3

400

$y_0 \cdots y_3$

0

$y_3(s)$

403

402

s

$y_2(s)$

$y_1(s)$

404

$y_0(s)$

401

FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004049689 A1

- EP 0534892 A1